# EUROPÄISCHE PATENTSCHRIFT

(11) **EP 1 679 474 B1**
(45) Veröffentlichungstag und Bekanntmachung des Hinweises auf die Patenterteilung: **30.01.2013**
(21) Anmeldenummer: 05109857.2
(22) Anmeldetag: 21.10.2005
(51) Int. Cl.: F24C 15/10, A47B 97/00, H01R 24/38, H01R 24/76, H01R 24/68, H01R 103/00

(54) **Stromversorgungsvorrichtung**
Electrical power supply device
Dispositif d'alimentation électrique

(30) Priorität: 29.12.2004 DE 102004063282
(43) Veröffentlichungstag der Anmeldung: 12.07.2006
(73) Patentinhaber: BSH Bosch und Siemens Hausgeräte GmbH, 81739 München (DE)
(72) Erfinder: Neumayer, Dan, 83233, Bernau (DE); Zschau, Günter, 83301, Traunreut (DE)

(56) Entgegenhaltungen:
- EP-A- 0 813 031
- EP-A- 1 253 679
- WO-A-01/52704
- WO-A-95/08204
- WO-A-02/097927
- WO-A1-94/06185
- DE-U1- 29 702 211
- NL-C1- 1 021 911

## Beschreibung

Die Erfindung geht aus von einer Stromversorgungsvorrichtung mit einem Anschlussteil zum Aufstecken eines Küchengeräts nach dem Oberbegriff des Anspruchs 1 sowie von einer Anordnung, umfassend eine Stromversorgungseinrichtung und ein Küchengerät, nach dem Oberbegriff des Anspruchs 13.

Aus der WO 1994006185 A1 ist eine Stromversorgungsvorrichtung mit einem Anschlussteil zum Aufstecken eines Küchengeräts und zum Verbinden des Küchengeräts mit einem Haushaltsstromnetz bekannt. Das Anschlussteil weist ferner eine federbelastete Abdeckvorrichtung auf, die dazu vorgesehen ist, von einem korrespondierenden Steckelement des Küchengeräts aus einer geschlossenen Konfiguration verdrängt zu sein bzw. während eines Aufsteckvorgangs von dem Steckelement verdrängt zu werden. Die Abdeckvorrichtung umfasst zumindest zwei unabhängig voneinander aus der geschlossenen Konfiguration auslenkbare Abdeckelemente.

Die DE 297 02 211 U1 zeigt eine Grundplatte als Basisstation für die Zubereitung von Speisen und Getränken am täglichen Frühstückstisch und auf der Basisstation abgestellte, mit einem Handgriff versehenen, abnehmbaren Geräte, bei denen im unteren Gehäuseteil die jeweils zugeordneten elektrischen Heiz- und Temperaturregelvorrichtungen an der Unterseite des Kesselbodens montiert sind, wobei mehrere Steckkontakte auf einer Basisstation vorhanden sind, die beim positionsgenauen Abstellen der Geräte auf der Basisstation, mit den dort jeweils vorhandenen Steckerkupplungen, elektrisch leitend verbunden sind.

Aus der WO 2001052704 A1 ist ein modulares Haushaltsgerätesystem bekannt, welches eine Mehrzahl von modularen Haushaltsgeräten und eine Basiseinheit zum Aufnehmen von zumindest zwei Haushaltsgeräten aufweist. Die Basiseinheit weist zumindest zwei elektrische Verbindungseinrichtungen auf, die für einen Eingriff mit komplementären Verbindungseinrichtungen der Haushaltsgeräte ausgelegt sind.

Die EP 813031 A2 zeigt eine Kochmulde mit mindestens einer herkömmlichen Kochstelle, die durch eine elektrische Stromversorgung der Kochmulde gespeist ist, wobei die Kochmulde eine weitere Kochstelle mit einem elektrischen Steckkupplungsteil aufweist, das aus der Oberfläche der Kochmulde ragt und an die Stromversorgung elektrisch angeschlossen ist.

Der Erfindung liegt die Aufgabe zugrunde, eine Stromversorgungsvorrichtung bereitzustellen, in der eine Küchenplatte die Funktion eines Sockels übernehmen kann.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Stromversorgungsvorrichtung mit einem zur Integration in eine Küchenplatte vorgesehenen Anschlussteil zum Aufstecken eines Küchengeräts und zum Verbinden des Küchengeräts mit einem Haushaltsstromnetz. Auf einen separaten Sockelbereich kann vorteilhaft verzichtet werden, und ein Platzbedarf der Stromversorgungsvorrichtung auf einer Küchenarbeitsplatte kann vorteilhaft reduziert werden. Dadurch können sich neben ästhetischen Vorteilen auch Vorteile hinsichtlich der Reinigungseigenschaften der Stromversorgungseinheit ergeben.

Es wird vorgeschlagen, dass das Anschlussteil wenigstens eine federbelastete Abdeckvorrichtung umfasst, die dazu vorgesehen ist, von einem korrespondierenden Steckelement des Küchengeräts aus einer geschlossenen Konfiguration verdrängt zu sein, und welche Abdeckvorrichtung zumindest zwei unabhängig voneinander aus der geschlossenen Konfiguration in axialer Richtung auslenkbare Abdeckelemente umfasst. Dadurch kann ein unbeabsichtigter, gefahrenträchtiger Kontakt eines Bedieners mit dem Haushaltsstromnetz und ein Eindringen von Flüssigkeiten in das Anschlussteil vermieden werden. Ferner bedeckt die Abdeckvorrichtung im geschlossenen Zustand ein Kontaktelement des Anschlussteils und schützt vor Verschmutzungen. Dadurch dass die Abdeckvorrichtung zumindest zwei unabhängig voneinander aus einer geschlossenen Konfiguration auslenkbare Abdeckelemente umfasst, kann ein versehentliches Auslenken der Abdeckvorrichtung durch von dem Steckelement verschiedene Werkzeuge ähnlich einem Schlüssel-Schloss-Prinzip vermieden werden, und eine Gefahr eines unkontrollierten Kontakts eines Bedieners mit dem Haushaltsstromnetz kann verhindert werden.

Unter "vorgesehen" soll in diesem Zusammenhang auch "ausgelegt" und "ausgestattet" verstanden werden. Als "Haushaltsstromnetz" soll das von der Gesamtheit der in einer Immobilie oder in Einbaumöbeln bzw. einer Einbauküche eines Haushalts integrierten Leitungen mit räumlich festen Endpunkten gebildete Stromnetz bezeichnet werden. Eine Küchenplatte im Sinne der Erfindung ist jede über einen Bereich von einigen Dezimetern flache und zumindest ungefähr horizontal ausgerichtete Fläche in einer Küche eines Haushalts, wobei ein komfortables Arbeiten ermöglicht werden kann, wenn eine Höhe einer Einbaulage der Küchenplatte zwischen 60 cm und 150 cm liegt. Die Küchenplatte kann als herkömmliche Küchenarbeitsplatte ausgebildet sein oder Teil einer separaten, in eine Arbeitsfläche einer Küche integrierten Sockeleinheit sein, die neben ihrer Funktion als Sockeleinheit für das aufgesteckte Küchengerät vorteilhaft noch wenigstens eine weitere Funktion, beispielsweise als Abstellplatte, übernehmen kann. Mit "Aufstecken" soll insbesondere eine Bewegung eines Körpers und/oder Gehäuses des Küchengeräts bezeichnet werden.

In einer Weiterbildung der Erfindung wird vorgeschlagen, dass die Stromversorgungsvorrichtung zumindest ein Befestigungsmittel zum Befestigen des Anschlussteils in einer Ausnehmung in der Küchenplatte umfasst. Dadurch kann die Stromversorgungsvorrichtung flexibel im Zusammenhang mit einer Vielzahl von verschiedenartigen Küchenplatten Verwendung finden.

Zudem wird vorgeschlagen, dass das Anschlussteil zumindest ein Kontaktelement zum Schließen einer Leiterbahn aufweist, welche die Küchenplatte durchgreift. Dadurch kann ein oberhalb der Küchenplatte verlaufendes, störendes Kabel der Leiterbahn entfallen.

Zusätzliche Sicherheit kann erreicht werden, wenn die Stromversorgungsvorrichtung zumindest ein Schaltelement umfasst, das durch Auslenken wenigstens eines Abdeckelements der Abdeckvorrichtung betätigbar ist. Dabei kann erreicht werden, dass das Kontaktelement nur bei korrekter Benutzung des Anschlusselements mit Spannung beaufschlagt wird, wenn das Schaltelement zum Verbinden des Kontaktelements mit dem Haushaltsstromnetz vorgesehen ist, so dass nur bei korrekt ausgelenkter Abdeckvorrichtung eine Spannung am freigelegten Kontaktelement anliegt.

Besonders vorteilhaft sind Ausgestaltungen der Erfindung, in denen durch das Auslenken eines ersten Abdeckelements ein zweites Kontaktelement, das von einem zweiten Abdeckelement bedeckt ist, mit Spannung beaufschlagt wird und umgekehrt. Dadurch kann erreicht werden, dass nur durch das gleichzeitige Auslenken beider Abdeckelemente ein unter Spannung stehendes Kontaktelement freigelegt werden kann.

Eine Funkenbildung beim Herstellen eines Kontakts des Kontaktelements mit einem korrespondierenden Kontaktelement des Steckelements kann vermieden werden, wenn das Schaltelement nur bei geschlossenem Kontakt des Kontaktelements mit einem korrespondierenden Kontaktelement des Steckelements betätigbar ist bzw. wenn das Abdeckelement nur bei vorherigem Herstellen des Kontakts so weit ausgelenkt werden kann, dass der Schalter sich schließt.

Umfasst die Stromversorgungsvorrichtung eine Schaltvorrichtung, die zum Verbinden des Kontaktelements mit dem Haushaltsstromnetz bei gleichzeitigem Auslenken beider auslenkbarer Abdeckelemente aus ihrer geschlossenen Konfiguration vorgesehen ist, kann eine weiter erhöhte Betriebssicherheit erreicht werden. Die Schaltvorrichtung umfasst dabei vorteilhaft zumindest zwei, durch eine logische UND-Schaltung verknüpfte Schaltelemente. Die Schaltelemente können besonders bauraumsparend und robust als Mikroschalter ausgebildet sein. Bei Vorliegen einer UND-Bedingung kann entweder ein Stromkreis geschlossen werden, der einen Verbraucher im Küchengerät umfasst, oder es kann ein Kontaktelement mit einer Spannung beaufschlagt werden.

Eine einfache Positionierung auch von Küchengeräten mit großem Durchmesser kann erreicht werden, wenn ein Durchmesser des Anschlussteils größer als 3 cm oder besser noch größer als 5 cm ist. Es ist dann auch ein Positionieren von Küchengeräten, die eine Sicht auf das Anschlussteil versperren, wie beispielsweise Pfannen oder Woks, komfortabel erreichbar. Ferner ist es vorteilhaft, wenn der Durchmesser des Anschlussteils kleiner als etwa 10 cm ist, da das Anschlussteil dann vorteilhaft mit einem auch für kleinere Küchengeräte akzeptablen Steckelement zussammenwirken kann. Ein besonders vorteilhafter Größenbereich des Durchmessers des Anschlussteils liegt zwischen 50 mm und 90 mm.

Ist das Anschlussteil zum Aufstecken des Küchengeräts in einer Vielzahl von Drehlagen vorgesehen, kann ein Bedienkomfort erhöht werden, da für einen Bediener eine Suche nach einer geeigneten Drehlage verkürzt werden kann.

Ein Überspringen von Funken, insbesondere im Bereich der Abdeckvorrichtung, kann vermieden werden, wenn ein Abstand zwischen dem Kontaktelement und einer Oberfläche des Anschlussteils wenigstens 8 mm beträgt.

Ein Sammeln von Küchenflüssigkeiten, die trotz der Abdeckvorrichtung in einen Innenraum des Anschlussteils eindringen können, kann vermieden werden, wenn die Stromversorgungsvorrichtung ein Drainagemittel zum Abführen von Flüssigkeiten aus dem Innenraum des Anschlussteils aufweist. Das Drainagemittel kann besonders einfach und kostengünstig ein Loch in einem Boden des Anschlussteils umfassen oder als Rohr bzw. Schlauch zum Abführen der Küchenflüssigkeit ausgebildet sein.

Ferner geht die Erfindung aus von einer Anordnung, umfassend eine Stromversorgungseinrichtung und ein Küchengerät, welche Stromversorgungseinrichtung ein Anschlussteil zum Verbinden des Küchengeräts mit einem Haushaltsstromnetz aufweist, und welches Küchengerät mittels eines Steckelements mit dem Anschlussteil verbindbar ist, und einen Sockelbereich zum Abstützen des Küchengeräts bei geschlossener Steckverbindung unmittelbar auf einer Küchenplatte aufweist.

Es wird vorgeschlagen, dass das Anschlussteil wenigstens eine federbelastete Abdeckvorrichtung umfasst, die dazu vorgesehen ist, von dem korrespondierenden Steckelement des Küchengeräts aus einer geschlossenen Konfiguration verdrängt zu sein, und welche Abdeckvorrichtung zumindest zwei unabhängig voneinander aus der geschlossenen Konfiguration in axialer Richtung auslenkbare Abdeckelemente umfasst.

Ein sicherer Halt kann erreicht werden, wenn das Küchengerät ein Gehäuse umfasst, das mit dem Steckelement fest verbunden ist. Eine Höhe des Gehäuses kann zum Abstützen auf der Küchenplatte an eine Höhe des Anschlussteils bzw. eines aus der Küchenplatte herausragenden Anteils des Anschlussteils abgestimmt sein.

Eine frei wählbare relative Drehlage des Küchengeräts zum Anschlussteil kann erreicht werden, wenn das Kontaktelement zumindest eine zylindermantelförmige Fläche aufweist.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine in eine Küchenplatte integrierbare Stromversorgungsvorrichtung zum Aufstecken eines Küchengeräts,
- Fig. 2: die Stromversorgungsvorrichtung und einen Ausschnitt eines Küchengeräts in einem Vertikalschnitt,
- Fig. 3: die Stromversorgungsvorrichtung aus Figur 2 mit einem aufgesteckten Küchengerät,
- Fig. 4: ein Abdeckelement der Stromversorgungsvorrichtung aus den Figuren 1 - 3,
- Fig. 5: ein Schaltbild der Stromversorgungsvorrichtung aus den Figuren 1 -4,
- Fig. 6: eine Küchenplatte mit einer integrierten Stromversorgungsvorrichtung,
- Fig. 7: eine in ein modulares Kochfeld integrierte Küchenplatte mit zwei integrierten Stromversorgungsvorrichtungen und
- Fig. 8: ein Einbaugerät mit einer Küchenplatte mit zwei integrierten Stromversorgungsvorrichtungen.

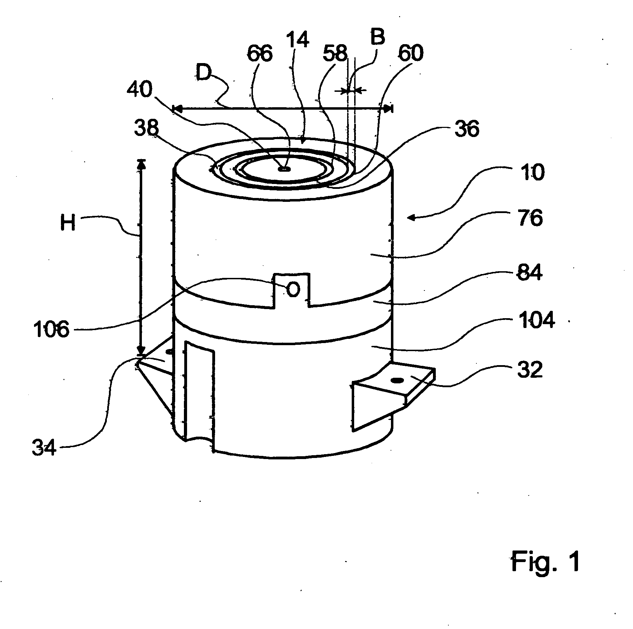

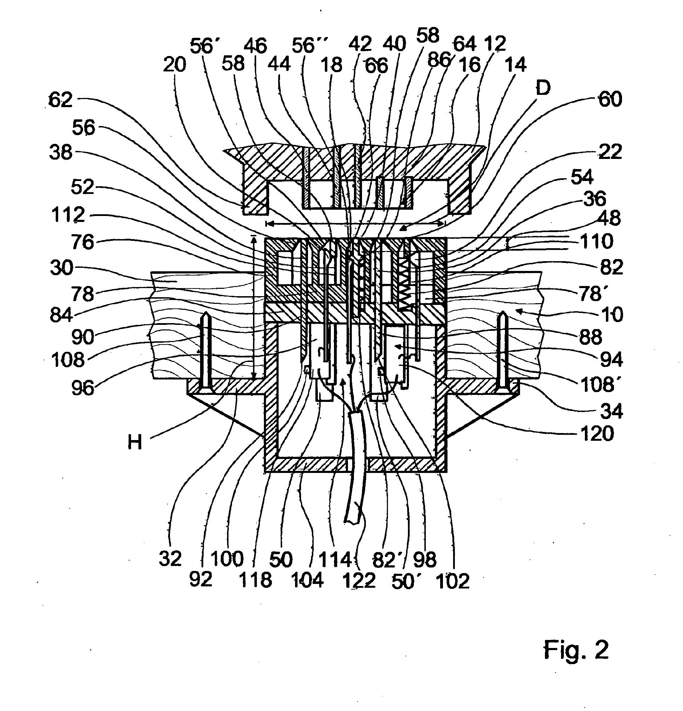

Die Figuren 1 und 2 zeigen eine Stromversorgungsvorrichtung, die in eine Küchenplatte 30 integriert ist. Ein aus der Küchenplatte 30 herausragender Teil der Stromversorgungsvorrichtung bildet ein Anschlussteil 10 zum Aufstecken eines Küchengeräts 12 und zum Verbinden des Küchengeräts 12 mit einem Haushaltsstromnetz. Das Anschlussteil 10 hat eine zylinderförmige Außenfläche mit einer vertikal ausgerichteten Zylinderachse, ragt um eine Höhe von 15 mm über die Küchenplatte 30 hinaus und weist einen Durchmesser D von 60 mm auf.

Auf einer kreisförmigen Oberfläche weist das Anschlussteil 10 zwei konzentrische Öffnungen 58, 60 von der Form eines ringförmigen Schlitzes auf. Ferner weist das Anschlussteil 10 eine mittige, kreisförmige Öffnung 66 auf, die zu den ringförmigen Öffnungen 58, 60 konzentrisch ist. Die Zentren der Ringform der Öffnungen 58, 60 und der Öffnung 66 liegen auf der Zylinderachse des Anschlussteils 10. Eine Breite B der Öffnungen 58, 60 beträgt etwa 1,5 mm und beträgt damit deutlich weniger als ein Zehntel des Durchmessers D des Anschlussteils 10. Ein Außendurchmesser der äußeren Öffnung 60 beträgt 40 mm und ein Außendurchmesser der kleineren Öffnung 58 beträgt 25 mm. Die Innendurchmesser der ringförmigen Öffnungen 58, 60 sind um jeweils 3 mm kleiner als die Außendurchmesser.

Ein Gehäuse des Anschlussteils 10 besteht aus einem oberen Gehäuseteil 76, in dem die Öffnungen 58, 60, 66 eingebracht sind, aus einem zweiten Gehäuseteil 84, das einen Zwischenboden bildet, und aus einer Unterschale 104. Das untere Gehäuseteil 84 weist drei gleichmäßig über einen Umfang verteilte Befestigungslaschen 106 auf, die bei der Montage axial in korrespondierende Ausnehmungen am oberen Gehäuseteil 84 eingreifen und die jeweils ein Loch für eine Schraube aufweisen, mittels der die Gehäuseteile 76, 84 radial miteinander verschraubt werden. Die Unterschale 104 wird bei der Montage mit dem zweiten Gehäuseteil 84 verschraubt. An der Unterschale 104 sind zwei sich gegenüberliegende, als in Einbaulage horizontal nach außen ragende Absätze ausgebildete Befestigungsmittel 32, 34 angeformt, die jeweils ein Loch zur Aufnahme einer Schraube 108, 108' aufweisen, mittels der die Stromversorgungsvorrichtung mit der Küchenplatte 30 verschraubt werden kann. Ein axialer Abstand H zwischen einer Anlagefläche der Befestigungsmittel 32, 34 und der kreisförmigen Oberseite des Anschlussteils 10 beträgt 60 mm, so dass das Anschlussteil 10 im montierten Zustand in der Küchenplatte 30 mit einer Normdicke von 45 mm um 15 mm über die Oberfläche der Küchenplatte 30 hinausragt.

Die ringförmigen Öffnungen 58, 66, sind in der in Figur 1 dargestellten geschlossenen Konfiguration ohne aufgestecktes Küchengerät 12 von passgenauen, ebenfalls ringförmigen Abdeckelementen 36, 38 verschlossen. Die kreisförmige Öffnung 66 ist von einem passgenauen, stiftförmigen Abdeckelement 40 verschlossen. In der dargestellten, geschlossenen Konfiguration schließen die oberen Ränder der Abdeckelemente 36 - 40 bündig mit der kreisförmigen Oberfläche des Anschlussteils 10 ab. Die Abdeckelemente 36 - 40 sind Teil einer Abdeckvorrichtung 14 der Stromversorgungsvorrichtung und sind jeweils unabhängig voneinander gegen eine Federkraft in axialer Richtung nach unten bzw. in Richtung der Küchenplatte 30 auslenkbar.

Die Öffnungen 58, 60, 66 weiten sich in axialer Richtung nach innen auf, so dass jeweils eine Hinterschneidung 56 - 56'" entsteht, die nur durch schmale, axial verlaufende Führungsrippen 110, 112 unterbrochen wird. Die Innenseiten der Führungsrippen 110, 112 bilden Führungsflächen 52, 54 zum Führen der Abdeckelemente 36, 38 in der axialen Richtung. Dadurch kann ein Verkleben des Gehäuseteils 76 mit den Abdeckelementen 36 - 40 sicher vermieden werden.

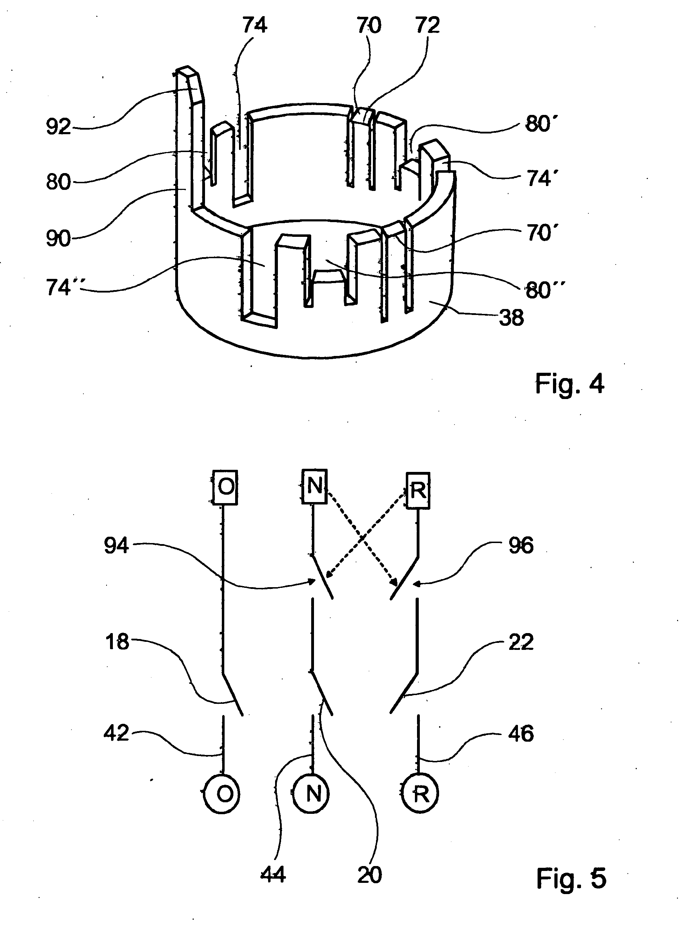

Die Abdeckelemente 36, 38 sind im Großen und Ganzen zylindermantelförmig ausgebildet und weisen an einem unteren, den Öffnungen 58, 60 abgewandten Rand mehrere schlitzförmige Ausnehmungen auf, die sich jeweils axial erstrecken (Figur 4). Ein erster Typ von Ausnehmungen trennt drei an einem Ende an das entsprechende Abdeckelement 36, 38 angeformte Rastzungen 70, 70' von einem Mantel des Abdeckelements 36, 38, so dass sich die Rastzungen 70, 70' relativ zum Mantel in radialer Richtung auslenken lassen. An einem freien Ende weist jede der Rastzungen 70, 70' eine Rastnase 72 auf. Die Rastnasen 72 des in Figur 1 dargestellten, größeren Abdeckelements 38 weisen radial nach innen, während die hier nicht dargestellten Rastnasen des kleineren Abdeckelements 36 radial nach außen weisen. Die Rastzungen 70, 70' sind in jeweils um 120° verschiedenen Lagen an das Abdeckelement 38 angeformt.

Drei weitere Ausnehmungen 74 - 74" sind ebenfalls mit Abständen von 120° über den Umfang des Abdeckelements 38 verteilt und dienen zum Führen des Abdeckelements 38 in axialer Richtung beim Auslenken aus der geschlossenen Konfiguration und zum Fixieren einer Drehlage des Abdeckelements 38 relativ zu einem Gehäuseteil 76 des Anschlussteils 10, in dem auch die Öffnungen 58, 60, 66 angeordnet sind. Das Gehäuseteil 76 weist drei sich in radialer Richtung erstreckende und im Abstand von 120° angeordnete Rippen 78, 78' auf, die im zusammengebauten Zustand der Stromversorgungsvorrichtung in die Ausnehmungen 74 - 74" eingreifen. Eine Breite der Rippen 78, 78' ist bis auf ein Montagespiel gleich der Breite der Ausnehmungen 74 - 74" und beträgt etwa 3 mm.

Drei weitere Ausnehmungen 80 - 80" sind ebenfalls mit Abständen von 120° über den Umfang des Abdeckelements 38 verteilt und dienen zum Halten von jeweils einer Spiralfeder 82, die sich an einem zweiten Gehäuseteil 84 in axialer Richtung abstützt. Um ein Abrutschen der Spiralfeder 82 zu verhindern, sind am Grund der Ausnehmungen 80 - 80" und am Gehäuseteil 84 jeweils Zentrierelemente angeordnet, die von beiden Seiten in die Spiralfeder 82 eingreifen.

Das Abdeckelement 36 weist Ausnehmungen und Rastzungen auf, die zu den Ausnehmungen 74 - 74", 80 - 80" und Rastzungen 70, 70' des dargestellten Abdeckelements 38 analog sind.

In der geschlossenen Konfiguration belasten die Spiralfedern 82 die Abdeckelemente 36, 38 in axialer Richtung nach oben. Dabei kommen die Rastnasen 72, 72' an korrespondierenden, an das Gehäuseteil 76 bzw. an die Führungsrippen 110, 112 angeformten Rastnasen zur Anlage und stützen so die Federkraft der Spiralfedern 82 an dem Gehäuseteil 76 ab. Zur Montage werden die Abdeckelemente 36, 38 axial von oben in die Öffnungen 58, 60 eingeschoben. Kommen die Rastnasen 72, 72' mit den korrespondierenden Rastnasen in Kontakt, so deformieren sich die Rastzungen 70 - 70" radial nach innen, bis die Rastnasen 72, 72' einrasten und eine Rastverbindung zwischen den Abdeckelementen 36, 38 und dem Gehäuseteil 76 hergestellt ist.

Das stiftförmige Abdeckelement 40 ist ebenfalls durch eine Spiralfeder 82' belastet und lässt sich gegen die Federkraft der Spiralfeder 82' nach unten verschieben. Zum Abstützen der Spiralfeder 82' und als Anschlag nach oben ist an das stiftförmige Abdeckelement 40 ein Kragen 86 angeformt.

Wird eine in axialer Richtung in Einbaulage nach unten gerichtete Kraft auf das Abdeckelement 36 ausgeübt, so wird dieses entgegen der Federkraft der Spiralfedern 82 in das Innere des Gehäuseteils 76 verschoben, bis der Grund der Ausnehmungen 74 - 74" an den Rippen 78 - 78" anstößt. Analoges gilt für das Abdeckelement 38.

Die Abdeckelemente 36, 38 weisen jeweils eine sich in axialer Richtung durch Öffnungen im Gehäuseteil 84 in einen unteren Bereich der Stromversorgungsvorrichtung hinein erstreckende Schaltzunge 88, 90 auf, deren freies Ende eine in Umfangsrichtung schräg verlaufende, um etwa 45° geneigte Fläche 92, 102 aufweist. Im unteren Bereich sind am Gehäuseteil 84 zwei als Mikroschalter 94, 96 ausgebildete Schaltelemente angeordnet, die jeweils ein Gehäuse 118, 120, zwei Kontakte und einen im eingebauten Zustand in Umfangsrichtung verschiebbaren Schaltknopf 98, 100 aufweisen. Die Schaltzungen 88, 90 liegen mit den geneigten Flächen 92, 102 an den Schaltknöpfen 98, 100 an, so dass die federbelasteten Schaltknöpfe 98, 100 in Einbaulage horizontal in das Gehäuse 118, 120 des jeweiligen Mikroschalters 94, 96 hinein verschoben werden und dort eine leitende Verbindung zwischen den Kontakten der Mikroschalter 94, 96 herstellen. Die Mikroschalter 94, 96 bilden zusammen eine Schaltvorrichtung 114.

In das Gehäuseteil 84 sind zudem drei bandförmige Kontaktelemente 18 - 22 eingegossen, die in der geschlossenen Konfiguration in radialer Richtung mit einem Schleifer jeweils an den Seitenflächen der Abdeckelemente 36 - 40 abgestützt sind und die bei geöffneter Abdeckvorrichtung 14 durch ihre Federkraft in die jeweilige Öffnung 58, 60, 66 hineingedrängt sind.

Die freien Enden der Kontaktelemente 18 - 22 weisen einen Abstand 48 von 8 mm zu der kreisförmigen Oberfläche des Gehäuseteils 76 bzw. des Anschlussteils 10 auf.

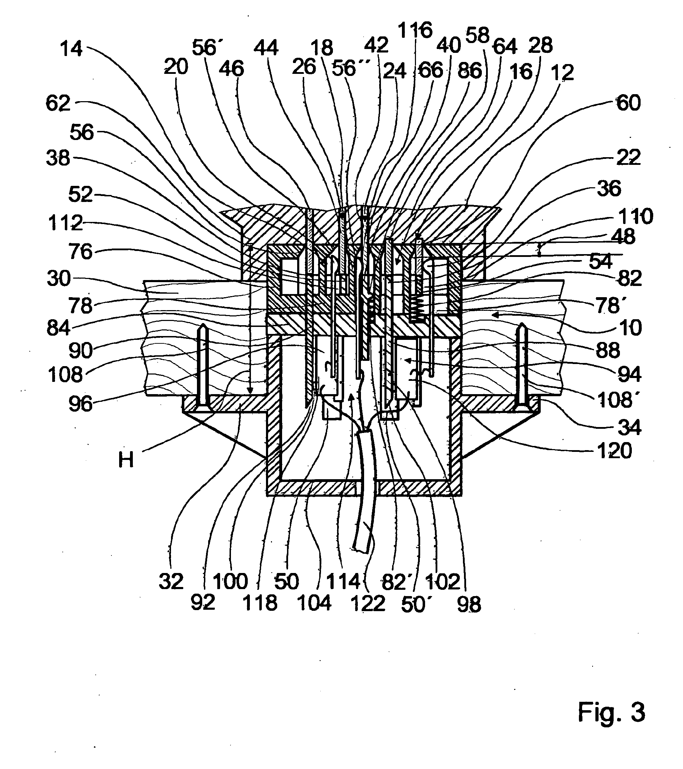

Das in Figur 2 in einem Ausschnitt dargestellte Küchengerät 12 weist ein Steckelement 16 zum Eingehen einer Steckverbindung mit dem Anschlussteil 10 auf, dessen wesentliche Bestandteile zwei ringförmige, konzentrische Kontaktelemente 44, 46 mit zylindermantelförmigen Innen- und Außenflächen und ein stiftförmiges Kontaktelement 42 mit rundem Querschnitt sind. Die Abmessungen der Kontaktelemente 42 - 46 entsprechen den Abmessungen der Öffnungen 58, 60, 66, so dass die Kontaktelemente 42 - 46 zum Aufstecken des Küchengeräts 12 auf das Anschlussteil 10 in die Öffnungen 58, 60, 66 eingreifen und so dass während einer Aufsteckbewegung die Abdeckelemente 36 - 40 in axialer Richtung in das Innere des Anschlussteils 10 verschoben werden. Dabei kommen nach einem Verschiebeweg von 8 mm die Kontaktelemente 18 - 22 an die Kontaktelemente 42 - 46 zur Anlage und schließen drei, die Küchenplatte 30 durchgreifende Leiterbahnen 24 - 28, die von den Kontaktelementen 18-22 und den Kontaktelementen 42 - 46 gebildet sind (Figur 3).

Das Küchengerät 12 weist einen kreisförmigen Sockelbereich 62 auf, mit dem es in einem auf das Anschlussteil 10 aufgesteckten Zustand unmittelbar auf der Küchenplatte 30 abgestützt ist, so dass die Küchenplatte 30 und nicht das Anschlussteil 10 einen Hauptteil eines Gewichts des Küchengeräts 12 trägt. Der Sockelbereich 62 überdeckt dann das Anschlussteil 10. Die Küchenplatte 30 übernimmt daher die Funktion eines Sockels für das Küchengerät 12. Der Sockelbereich 62 des Küchengeräts 12 ist unmittelbar an einem Gehäuse 64 des Küchengeräts 12 befestigt.

Im eingebauten Zustand ist das Kontaktelement 22 über den Mikroschalter 94 mit einem Minuspol des Haushaltsstromnetzes verbunden, das Kontaktelement 20 ist über den geschalteten Mikroschalter 96 mit einem Pluspol des Haushaltstromnetzes verbunden, und das Kontaktelement 18 ist unmittelbar mit einem Nullleiter des Haushaltsstromnetzes verbunden (Figur 4). Das Kontaktelement 18 schließt daher einen Schutzleiterkontakt 116, und zwar bei einem Aufsteckvorgang des Küchengeräts 12 vorauseilend, d. h. vor den Kontaktelementen 20, 22, und bei einem Abziehen des Küchengeräts 12 nacheilend. Der Fachmann kann nach Belieben einen Potentiometer und/oder ein Schaltelement 124 zwischen die Stromversorgungsvorrichtung und einen Hauptteil des Haushaltsstromnetzes schalten.

Durch die Verschaltung der Mikroschalter 94, 96 gelangt nur dann eine Spannung auf das Kontaktelement 20, wenn das das Kontaktelement 22 bedeckende Abdeckelement 36 ausgelenkt ist, und das Kontaktelement 22 wird nur dann mit dem Haushaltsstromnetz verbunden, wenn das das Kontaktelement 20 bedeckende Abdeckelement 38 ausgelenkt ist. Ein das Küchengerät 12 umfassender Stromkreis wird nur dann geschlossen, wenn beide Abdeckelemente 36, 38 gleichzeitig und weit genug aus ihrer geschlossenen Konfiguration ausgelenkt sind. Die mechanische Verbindung durch die Schaltzungen 88, 90 ist in Figur 4 durch gestrichelte Pfeile dargestellt. Über das Abdeckelement 38 kann daher das von dem Abdeckelement 36 bedeckte Kontaktelement 20 beschaltet werden, und über das Abdeckelement 36 kann das von dem Abdeckelement 38 bedeckte Kontaktelement 22 beschaltet werden.

Das Schließen der Mikroschalter 94, 96 erfolgt beim Aufstecken des Küchengeräts 12 erst nach einem Verschiebeweg der Abdeckelemente 36 - 40, der länger ist als ein Verschiebeweg, bei dem sich die Kontaktelemente 18 - 22 des Küchengeräts 12 und die Kontaktelemente 42 - 46 des Anschlussteils 10 berühren. Dadurch kann eine Gasentladung zwischen dem Küchengerät 12 und dem Anschlussteil 10 beim Aufstecken oder Abziehen des Küchengeräts 12 vermieden werden. Beim Abziehen des Küchengeräts 12 werden die Kontaktelemente 42 - 46 analog zunächst vom Haushaltsstromnetz und dann erst von den Kontaktelementen 18 - 22 des Küchengeräts 12 getrennt.

In dem unteren Gehäuseteil 76 ist ein röhrenförmiges Drainagemittel 50 eingeformt, das in die Stromversorgungsvorrichtung hineintropfende Flüssigkeit an den Mikroschaltern 94, 96 vorbeileitet. In einer Unterschale 104 der Stromversorgungsvorrichtung ist ein Loch zum Durchführen eines mit dem Haushaltsstromnetz verbundenen Verbindungskabels 122 angeordnet. Das Loch ist groß genug, um ein Abtropfen der Flüssigkeit zu erlauben.

Figur 5 zeigt das Anschlussteil 10 in einem eingebauten Zustand in einer Schrägansicht. Neben dem Anschlussteil 10 ist ein Schaltelement 124 angeordnet, durch das ein Bediener die Stromversorgungsvorrichtung aktivieren und deaktivieren kann. Ferner kann der Bediener eine an den Kontaktelementen 20, 22 anliegende Spannung bestimmen.

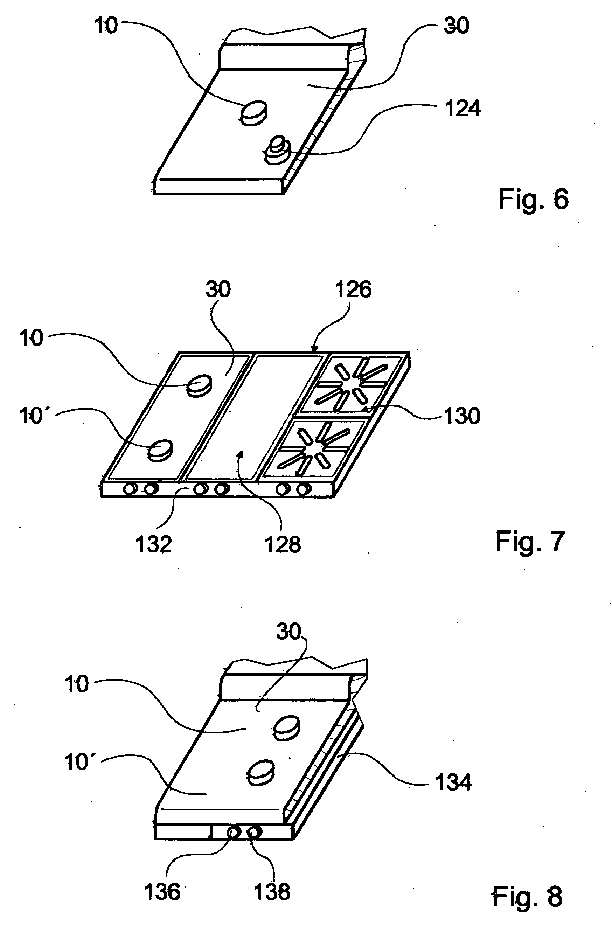

Die Figuren 7 und 8 zeigen verschiedene eingebaute Stromversorgungsvorrichtungen der in den Figuren 1 - 5 dargestellten Art. Analoge Merkmale sind mit gleichen Bezugszeichen versehen. Zur Beschreibung der Anschlussteile 10, 10' wird auf die Beschreibung zu den Figuren 1 - 6 verwiesen.

Figur 7 zeigt ein modular aufgebautes Kochfeld 126 mit einem ersten Modul, das eine Küchenplatte 30 mit zwei integrierten Anschlussteilen 10, 10' umfasst. Ferner umfasst das Kochfeld 126 eine Glaskeramikkochmulde 128 und eine zweiflammige Gaskochmulde 130. Über ein gemeinsames Bedienfeld 132 können sowohl die Anschlussteile 10, 10' als auch die Glaskeramikkochmulde 128 und die Gaskochmulde 130 betätigt werden.

Figur 8 zeigt ein Einbaugerät mit zwei Anschlussteilen 10, 10' und mit einem Steuergerät 134 mit zwei Schaltknöpfen 136, 138, die jeweils einem der Anschlussteile 10, 10' zugeordnet sind.

## Patentansprüche

1. Stromversorgungsvorrichtung mit einem zur Integration in eine Küchenplatte (30) vorgesehenen Anschlussteil (10) zum Aufstecken eines Küchengeräts (12) und zum Verbinden des Küchengeräts (12) mit einem Haushaltsstromnetz, **dadurch gekennzeichnet, dass** das Anschlussteil (10) wenigstens eine federbelastete Abdeckvorrichtung (14) umfasst, die dazu vorgesehen ist, von einem korrespondierenden Steckelement (16) des Küchengeräts (12) aus einer geschlossenen Konfiguration verdrängt zu sein, und welche Abdeckvorrichtung (14) zumindest zwei unabhängig voneinander aus der geschlossenen Konfiguration in axialer Richtung auslenkbare Abdeckelemente (36 - 40) umfasst.

2. Stromversorgungsvorrichtung nach Anspruch 1, **gekennzeichnet durch** zumindest ein Befestigungsmittel (32, 34) zum Befestigen des Anschlussteils (10) in einer Ausnehmung in der Küchenplatte (30).

3. Stromversorgungsvorrichtung nach einem der vorhergehenden Ansprüche, **dadurch gekennzeichnet, dass** das Anschlussteil (10) zumindest ein Kontaktelement (18 - 22) zum Schließen einer Leiterbahn (24 - 28) aufweist, welche die Küchenplatte (30) durchgreift.

4. Stromversorgungsvorrichtung nach einem der vorhergehenden Ansprüche, **gekennzeichnet durch** zumindest ein Schaltelement (94, 96), das **durch** Auslenken wenigstens eines Abdeckelements (36, 38) der Abdeckvorrichtung (14) betätigbar ist.

5. Stromversorgungsvorrichtung nach einem der vorhergehenden Ansprüche, **dadurch gekennzeichnet, dass** das Anschlussteil (10) einen Durchmesser (D) zwischen 50 mm und 90 mm aufweist.

6. Stromversorgungsvorrichtung nach einem der vorhergehenden Ansprüche, **dadurch gekennzeichnet, dass** das Anschlussteil (10) zum Aufstecken des Küchengeräts (12) in einer Vielzahl von Drehlagen vorgesehen ist.

7. Stromversorgungsvorrichtung nach einem der vorhergehenden Ansprüche, **dadurch gekennzeichnet, dass** ein Abstand (48) zwischen dem Kontaktelement (18 - 22) und einer Oberfläche des Anschlussteils (10) wenigstens 8 mm beträgt.

8. Stromversorgungsvorrichtung nach einem der vorhergehenden Ansprüche, **gekennzeichnet durch** ein Drainagemittel (50) zum Abführen von Flüssigkeiten aus einem Innenraum des Anschlussteils (10).

9. Stromversorgungsvorrichtung nach einem der vorhergehenden Ansprüche, **dadurch gekennzeichnet, dass** wenigstens eine Führungsfläche (52, 54) der Abdeckvorrichtung (14) eine Hinterschneidung (56) aufweist.

10. Stromversorgungsvorrichtung nach einem der vorhergehenden Ansprüche, **dadurch gekennzeichnet, dass** das Anschlussteil (10) zumindest eine schlitzförmige Öffnung (58, 60) zur Aufnahme eines korrespondierenden Kontaktelements (44, 46) des Steckelements (16) aufweist.

11. Stromversorgungsvorrichtung nach Anspruch 10, **dadurch gekennzeichnet, dass** eine Breite (B) der Öffnung (58, 60) weniger als ein Zehntel eines Durchmessers (D) des Anschlussteils (10) ausmacht.

12. Stromversorgungsvorrichtung nach einem der Ansprüche 10 und 11, **dadurch gekennzeichnet, dass** die Öffnung (58, 60) kreisförmig ausgebildet ist.

13. Anordnung, umfassend eine Stromversorgungseinrichtung und ein Küchengerät (12), welche Stromversorgungseinrichtung ein Anschlussteil (10) zum Verbinden des Küchengeräts mit einem Haushaltsstromnetz aufweist, und welches Küchengerät (12) mittels eines Steckelements (16) mit dem Anschlussteil (10) verbindbar ist, und einen Sockelbereich (62) zum Abstützen des Küchengeräts (12) bei geschlossener Steckverbindung unmittelbar auf einer Küchenplatte aufweist, **dadurch gekennzeichnet, dass** das Anschlussteil (10) wenigstens eine federbelastete Abdeckvorrichtung (14) umfasst, die dazu vorgesehen ist, von dem korrespondierenden Steckelement (16) des Küchengeräts (12) aus einer geschlossenen Konfiguration verdrängt zu sein, und welche Abdeckvorrichtung (14) zumindest zwei unabhängig voneinander aus der geschlossenen Konfiguration in axialer Richtung auslenkbare Abdeckelemente (36 - 40) umfasst.

14. Anordnung nach Anspruch 13, **dadurch gekennzeichnet, dass** das Küchengerät ein Gehäuse (64) aufweist, mit dem das Steckelement (16) fest verbunden ist.

15. Anordnung nach einem der Ansprüche 13 und 14, **dadurch gekennzeichnet, dass** das Küchengerät zumindest ein Kontaktelement (42 - 46) aufweist, das zumindest eine zylindermantelförmige Fläche aufweist.

16. Anordnung nach einem der Ansprüche 13 - 15, **dadurch gekennzeichnet, dass** das Küchengerät zumindest zwei ringförmige, konzentrisch angeordnete Kontaktelemente (44, 46) aufweist.

## Claims

1. Power supply device with a connecting part (10), which is provided for integration in a kitchen worktop (30), for plugging on a kitchen appliance (12) and for connection of the kitchen appliance (12) with a domestic power supply mains, **characterised in that** the connecting part (10) comprises at least one spring-loaded cover device (14) which is provided for the purpose of displacing a corresponding plug element (16) of the kitchen appliance (12) out of a closed configuration and which comprises at least two cover elements (36 - 40) deflectable independently of one another in axial direction out of the closed configuration.

2. Power supply device according to claim 1, **characterised by** at least one fastening means (32, 34) for fastening the connecting part (10) in a recess in the kitchen worktop (30).

3. Power supply device according to one of the preceding claims, **characterised in that** the connecting part (10) comprises at least one contact element (18 - 22) for closing a conductor track (24 - 28) passing through the kitchen worktop (30).

4. Power supply device according to any one of the preceding claims, **characterised by** at least one switching element (94, 96) actuable by deflection of at least one cover element (36, 38) of the cover device (14).

5. Power supply device according to any one of the preceding claims, **characterised in that** the connecting part (10) has a diameter (D) between 50 millimetres and 90 millimetres.

6. Power supply device according to any one of the preceding claims, **characterised in that** the connecting part (10) is provided for plugging on of the kitchen appliance (12) in a plurality of rotational positions.

7. Power supply device according to any one of the preceding claims, **characterised in that** a spacing (48) between the contact element (18 - 22) and a surface of the connecting part (10) is at least 8 millimetres.

8. Power supply device according to any one of the preceding claims, **characterised by** a drainage means (50) for conducting liquids away from an interior space of the connecting part (10).

9. Power supply device according to any one of the preceding claims, **characterised in that** at least one guide surface (52, 54) of the cover device (14) has an undercut (56).

10. Power supply device according to any one of the preceding claims, **characterised in that** the connecting part (10) has at least one slot-shaped opening (58, 60) for reception of a corresponding contact element (44, 46) of the plug element (16).

11. Power supply device according to claim 10, **characterised in that** the width (B) of the opening (58, 60) is less than a tenth of the diameter (D) of the connecting part (10).

12. Power supply device according to one of claims 10 and 11, **characterised in that** the opening (58, 60) is formed to be circular.

13. Arrangement, comprising a power supply device and a kitchen appliance (12), which power supply device comprises a connecting part (10) for connecting the kitchen appliance with a domestic power supply mains, and which kitchen appliance (12) is connectible with the connecting part (10) by means of a plug element (16), and a base region (62) for supporting the kitchen appliance (12) directly on a kitchen worktop when the plug connection is closed, **characterised in that** the connecting part (10) comprises at least one spring-loaded cover device (14), which is provided for the purpose of being displaced by the corresponding plug element (16) of the kitchen appliance (12) out of a closed configuration and which comprises at least two cover elements (36 - 40) deflectable independently of one another in axial direction out of the closed configuration.

14. Arrangement according to claim 13, **characterised in that** the kitchen appliance comprises a housing (64) with which the plug element (16) is fixedly connected.

15. Arrangement according to one of claims 13 and 14, **characterised in that** the kitchen appliance comprises at least one contact element (42 - 46) having at least one cylindrical circumferential surface.

16. Arrangement according to any one of claims 13 to 15, **characterised in that** the kitchen appliance comprises at least two annular, concentrically arranged contact elements (44, 46).

## Revendications

1. Dispositif d'alimentation électrique comprenant une pièce de connexion (10) ménagée pour être intégrée dans une plaque de cuisine (30) dans le but d'enficher un appareil de cuisine (12) et de connecter l'appareil de cuisine (12) à un réseau de courant domestique, **caractérisé en ce que** la pièce de connexion (10) comprend au moins un dispositif de recouvrement (14) contraint par ressort, qui est ménagé pour être déplacé par un élément enfichable correspondant (16) de l'appareil de cuisine (12) à partir d'une configuration fermée, et lequel dispositif de recouvrement (14) comprend au moins deux éléments de recouvrement (36 - 40) pouvant être déviés de la configuration fermée en direction axiale, indépendamment l'un de l'autre.

2. Dispositif d'alimentation électrique selon la revendication 1, **caractérisé par** au moins un moyen de fixation (32, 34) destiné à fixer la pièce de connexion (10) dans un évidement dans la plaque de cuisine (30).

3. Dispositif d'alimentation électrique selon l'une quelconque des revendications précédentes, **caractérisé en ce que** la pièce de connexion (10) présente au moins un élément de contact (18 - 22) destiné à fermer un circuit conducteur (24 - 28) qui traverse la plaque de cuisine (30).

4. Dispositif d'alimentation électrique selon l'une quelconque des revendications précédentes, **caractérisé par** au moins un élément de commutation (94, 96) que l'on peut actionner en déviant au moins un élément de recouvrement (36, 38) du dispositif de recouvrement (14).

5. Dispositif d'alimentation électrique selon l'une quelconque des revendications précédentes, **caractérisé en ce que** la pièce de connexion (10) présente un diamètre (D) compris entre 50 mm et 90 mm.

6. Dispositif d'alimentation électrique selon l'une quelconque des revendications précédentes, **caractérisé en ce que** la pièce de connexion (10) est ménagée pour enficher l'appareil de cuisine (12) dans une pluralité de positions rotatives.

7. Dispositif d'alimentation électrique selon l'une quelconque des revendications précédentes, **caractérisé en ce qu'**un écartement (48) entre l'élément de contact (18 - 22) et une surface de la pièce de connexion (10) est d'au moins 8 mm.

8. Dispositif d'alimentation électrique selon l'une quelconque des revendications précédentes, **caractérisé par** un moyen de drainage (50) destiné à évacuer des liquides à partir d'un espace intérieur de la pièce de connexion (10).

9. Dispositif d'alimentation électrique selon l'une quelconque des revendications précédentes, **caractérisé en ce qu'**au moins une surface de guidage (52, 54) du dispositif de recouvrement (14) présente une contre-dépouille (56).

10. Dispositif d'alimentation électrique selon l'une quelconque des revendications précédentes, **caractérisé en ce que** la pièce de connexion (10) présente au moins une ouverture en forme de fente (58, 60) pour le logement d'un élément de contact correspondant (44, 46) de l'élément enfichable (16).

11. Dispositif d'alimentation électrique selon la revendication 10, **caractérisé en ce qu'**une largeur (B) de l'ouverture (58, 60) s'élève à moins d'un dixième d'un diamètre (D) de la pièce de connexion (10).

12. Dispositif d'alimentation électrique selon l'une quelconque des revendications 10 et 11, **caractérisé en ce que** l'ouverture (58, 60) est réalisée de manière circulaire.

13. Agencement comprenant un dispositif d'alimentation électrique et un appareil de cuisine (12), lequel dispositif d'alimentation électrique présente une pièce de connexion (10) destinée à connecter l'appareil de cuisine à un réseau de courant domestique, et lequel appareil de cuisine (12) est connectable à la pièce de connexion (10) au moyen d'un élément enfichable (16), et comprenant une partie en socle (62) destinée à soutenir l'appareil de cuisine (12) directement sur une plaque de cuisine lorsque le dispositif de connexion est fermé, **caractérisé en ce que** la pièce de connexion (10) comprend au moins un dispositif de recouvrement (14) commandé par ressort, lequel est ménagé pour être déplacé par l'élément enfichable correspondant (16) de l'appareil de cuisine (12) à partir d'une configuration fermée, et lequel dispositif de recouvrement (14) comprend au moins deux éléments de recouvrement (36 - 40) pouvant être déviés de la configuration fermée en direction axiale, indépendamment l'un de l'autre.

14. Agencement selon la revendication 13, **caractérisé en ce que** l'appareil de cuisine présente un boîtier (64) auquel l'élément enfichable (16) est raccordé de manière fixe.

15. Agencement selon l'une quelconque des revendications 13 et 14, **caractérisé en ce que** l'appareil de cuisine présente au moins un élément de contact (42 - 46) qui présente au moins une surface en forme de corps de cylindre.

16. Agencement selon l'une quelconque des revendications 13 à 15, **caractérisé en ce que** l'appareil de cuisine présente au moins deux éléments de contact annulaires (44, 46) disposés concentriquement.
